Europäisches Patentamt

European Patent Office

Office européen des brevets

(19)

(11) Numéro de publication : **0 451 038 A1**

## (12) DEMANDE DE BREVET EUROPEEN

(21) Numéro de dépôt : **91400875.0**

(51) Int. Cl.⁵ : **F16G 5/16**

(22) Date de dépôt : **29.03.91**

(30) Priorité : **02.04.90 FR 9004163**

(43) Date de publication de la demande :
**09.10.91 Bulletin 91/41**

(84) Etats contractants désignés :
**AT BE CH DE DK ES FR GB GR IT LI LU NL SE**

(71) Demandeur : **CAOUTCHOUC MANUFACTURE
ET PLASTIQUES
143 bis, rue Yves Le Coz
F-78000 Versailles (FR)**

(72) Inventeur : **Douhairet, Louis
Chemin des Rimbault,
Saint-Leger-Des-Vignes
F-58300 Decize (FR)**
Inventeur : **Play, Daniel
42, les Hauts-Prés, Saint-Genis-Les-Ollieres
F-69290 Craponne (FR)**
Inventeur : **Trinquard, Roger
3, rue de la Paix, Saint-Leger-Des-Vignes
F-58300 Decize (FR)**

(54) **Lien souple de transmission de puissance, à âme trapézoïdale et maillons poussants enveloppés d'un tissu.**

(57) Lien souple de transmission de puissance à maillons poussants, transversalement rigides, et âme sans fin (2) formée d'une courroie trapézoïdale à flancs obliques (12) en contact avec les faces intérieures (14) des maillons en forme d'étriers (4) (20), lesdits étriers étant revêtus d'un tissu d'enveloppage (10) qui forme la surface au contact des flasques des poulies.

Application au domaine des transmissions à rapport fixe ou à celui de la variation continue de vitesse pour automobiles ou machines agricoles ou industrielles.

FIG.3

EP 0 451 038 A1

L'invention est du domaine des transmissions par lien souple fonctionnant par adhérence à sec entre une courroie de section trapézoïdale et des poulies à gorge, à faces fixes aussi bien que des poulies à flasques mobiles utilisées dans les variateurs de vitesse.

Ces deux types de transmission se rencontrent dans les usages automobiles comme sur les machines agricoles ou industrielles.

Les courroies trapézoïdales de transmission de puissance appartiennent à plusieurs familles de produits présentant une forme géométrique externe semblable.

Historiquement première apparue et encore majoritairement utilisée dans bien des applications industrielles, l'appellation "courroie trapézoïdale" s'applique plus précisément à un matériau composite, formé de câbles de traction le plus souvent en nappe, constituant une armature longitudinale de traction, noyée au sein d'un matériau élastomérique tel du caoutchouc en général synthétique. La transmission des efforts s'opère par les faces latérales, obliques, grâce au contact par friction sur la paroi métallique des flasques coniques des poulies.

Deux générations se rencontrent là, différant par l'état superficiel des faces latérales obliques : les plus anciennes courroies sont enveloppées de tissu fin qui assure la tenue à l'usure et la qualité de l'adhérence mécanique en fonctionnement au contact des flasques des poulies. Une autre conception, concurrente, est apparue plus récemment pour réaliser un produit final de même usage, mais sur lequel les faces obliques de contact sur les flasques des poulies sont obtenues par tranchage mécanique, ce type de courroies étant dit "à flancs nus".

Des améliorations de performances ont été recherchées par rapport à ces techniques traditionnelles, pour accroître la résistance à l'effet de coin, lorsque la compression transversale par les flasques des poulies provoque un flambage des éléments de rigidité transversale qui apportent la raideur s'opposant à l'écrasement de la courroie.

Des documents tels que FR 2.437.531 de la société VARITRAC ou EP 0.242.263 et EP 0.305.227 de HUTCHINSON décrivent des éléments rigides transversaux de renforcement, par exemple métalliques, coopérant avec une armature longitudinale de traction, les deux étant noyés dans le matériau élastomérique de la base de la courroie.

De telles courroies trapézoïdales larges sont en particulier utilisées dans des variateurs mécaniques de vitesse à usage industriel ou agricole.

Ce type de courroies ne présente pas de performances suffisantes pour une utilisation dans le domaine de la propulsion automobile.

Par contre, les exigences poussées de variateur de vitesse, et la recherche de leur utilisation, en particulier en propulsion automobile, ont donné naissance à des courroies de même géométrie, mais de fonctionnement tout autre, regroupées sans l'appellation générale de "courroies à maillons poussés".

De nombreux documents, en particulier de la société VAN DOORNE, tels US 3.720.113, FR 2.089.587, EP 0.000.802 et EP 0.014.013 ou EP 0.014.492, décrivent des ensembles de solides montés sur un lien de guidage, le plus souvent métallique, qui assure leur alignement, mais en principe ne participe pas à la transmission de puissance.

Celle-ci est réputée être exclusivement assurée par la poussée les uns sur les autres des maillons alignés d'une poulie à l'autre.

L'effort est alors communiqué par l'adhérence mécanique du maillon sur les flasques de la poulie. La concentration des contraintes peut se trouver si localisée que l'utilisation exclusive de métaux, et même de métaux traités spécialement pour accroître leur dureté, nécessite l'usage en milieu lubrifié. Lesdites contraintes de surface excluent l'usage d'élastomères ou de plastomères courants.

Cependant, une variante à cavaliers rigides fonctionnant à sec, fait appel à des plastiques armés dans les documents FR 2.536.486 et FR 2.527.723 et FR 2.536.487 de MICHELIN, ainsi que dans le document FR 2.625.783 de CAOUTCHOUC MANUFACTURE ET PLASTIQUES, demanderesse de la présente. Tous ces types de cavaliers sont portés par une courroie plate, elle-même composite, sur laquelle ils sont susceptibles de se mouvoir par basculement et glissement relatif. L'amélioration du contact entre ces deux types de solides indépendants, fait l'objet de nombreux perfectionnements, parmi lesquels sont encore à citer les documents DE 2.557.724 de Heynau, FR 2.540.953 de RNUR et CPIO, EP 0.073.962 de Nissan Motor, US 4.433.965 de Hattori et US 4.610.648 de Miranti, portant tous sur des courroies plates ou lanières, équipées de cavaliers rigides en plastique chargé ou renforcé de fibres, dont la puissance reste cependant limitée.

L'analyse de l'art antérieur montre, à l'évidence, qu'une courroie de transmission, fonctionnant par adhérence mécanique à sec, pour la transmission de puissances très élevées, tant en propulsion automobile que sur machines agricoles ou industrielles, et dont la durée de vie est grandement améliorée grâce à une répartition de contraintes sur l'ensemble de ses composants n'est pas connue.

L'objectif de la présente invention est un perfectionnement à la courroie trapézoïdale, qui combine les propriétés des différentes familles connues de l'art antérieur, sans se rattacher exclusivement à l'une de ces catégories, et réunit les avantages propres à l'une et à l'autre de ces familles.

Elle fait appel, pour l'âme sans fin d'une courroie à maillons poussés, à une courroie trapézoïdale préférentiellement du type dit à flancs nus.

Les étriers rigides, qui la chevauchent, agissent comme des maillons poussés, guidés sur leurs faces intérieures par les parois obliques de ladite courroie trapézoïdale. Cependant, leurs faces extérieures ne sont pas utilisées directement pour le contact sur les flasques des poulies, mais sont revêtues d'un tissu élastique enduit d'élastomère qui assure la liaison mécanique en permettant la déformabilité de maillon à maillon, ainsi que l'adhérence mécanique finale sur les flasques des poulies.

Dans l'ensemble ainsi constitué, la résistance à la compression transversale est assurée par les cavaliers rigides. Ceux-ci n'étant pas adhérisés, par l'intermédiaire de l'élastomère, à l'armature textile de traction, les contraintes sont mieux réparties sur tous les composants, dont les propriétés peuvent être exploitées à un niveau d'efficacité accru, correspondant à la somme des possibilités d'une courroie trapézoïdale et d'une courroie à maillons poussés, sans nécessité de lubrification externe.

L'invention est donc un lien souple de transmission de puissance, à rapport fixe ou à rapport variable par poulies à gorge, fonctionnant par adhérence à sec, constitué d'une âme sans fin, souple et quasiment inélastique, équipée de maillons poussants transversalement rigides.

L'invention est caractérisée en ce que ladite âme sans fin est formée d'une courroie trapézoïdale à flancs obliques en contact avec les faces intérieures des maillons en forme d'étriers entourant ladite âme sans fin et en ce que lesdits étriers rigides sont enveloppés d'un tissu d'enveloppage, qui forme la surface au contact des flasques des poulies de transmission.

L'invention sera mieux comprise à la lecture de la description accompagnant les dessins dans lesquels :
— La figure 1 est une vue perspective situant le lien souple selon l'invention dans une transmission par adhérence mécanique à sec ;
— La figure 2 est une vue latérale en coupe partielle montrant quelques maillons alignés sur l'âme sans fin ;
— La figure 3 est une section droite coupant ladite âme sans fin entre deux maillons ;
— La figure 4 est une vue de dessus du seul étrier rigide, montrant la présence de chanfreins ;
— La figure 5 est une variante à maillons constitués d'étriers fermés, en vue 5a à l'état libre, en vue 5b après l'assemblage des éléments du lien souple de transmission.

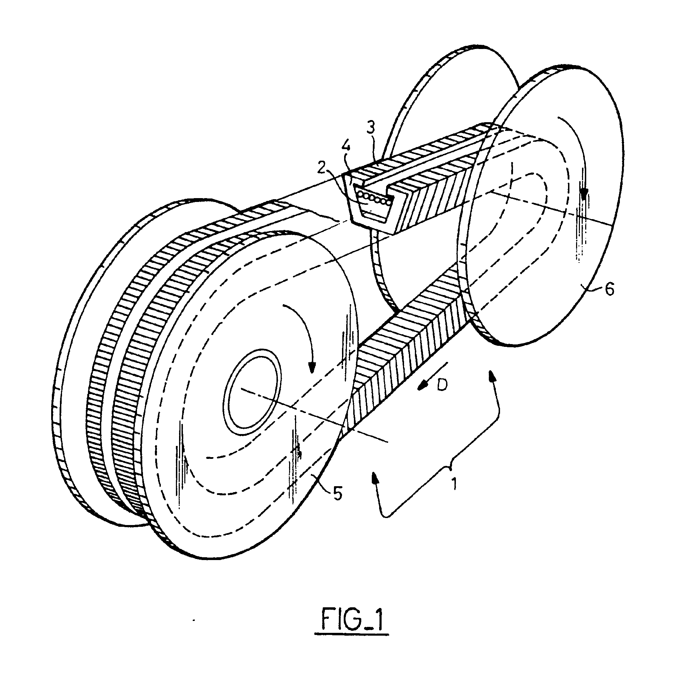

La figure 1 est une vue perspective schématisant les composants d'une courroie de transmission servant de lien souple selon l'invention.

La courroie de transmission (1) est composée d'une âme sans fin (2), normalement cachée par un tissu d'enveloppage (3), et qu'une section droite montre, partiellement enfermée par les étriers rigides (4). L'empilement de ceux-ci, alignés dans la direction (D) pour transmettre la puissance à une poulie réceptrice (5), est réputé agir essentiellement par poussée réciproque des maillons formés par les étriers rigides (4), poussée alimentée par le passage desdits étriers rigides sur la poulie motrice (6).

Ceci est l'interprétation du fonctionnement en maillons poussés, dans laquelle l'existence d'une âme sans fin, tendue entre les deux poulies, sert exclusivement de support de guidage.

Au contraire, une courroie trapézoïdale occupant le même encombrement, est réputée exercer un effort de la poulie motrice (6) à la poulie réceptrice (5), par différentielle de tension entre un brin tendu -qui serait ici représenté par la trajectoire rectiligne supérieure- et un brin de retour à faible tension au niveau de l'alignement inférieur montré par la direction (D).

La courroie de transmission composite ou lien souple selon l'invention, a une utilisation qui doit être interprétée comme la somme de ces deux types de fonctionnement. Les poulies, réceptrice (5) et motrice (6), ont ici été représentées comme celles d'un variateur de vitesse à rapports variables par déplacement axial d'un flasque par rapport à l'autre (par des moyens non représentés). Il est cependant loisible d'appliquer un accroissement des performances, par l'usage d'un lien souple de transmission conforme à l'invention, sur une transmission par adhérence à rapport fixe, dont les poulies à gorge sont de largeur constante.

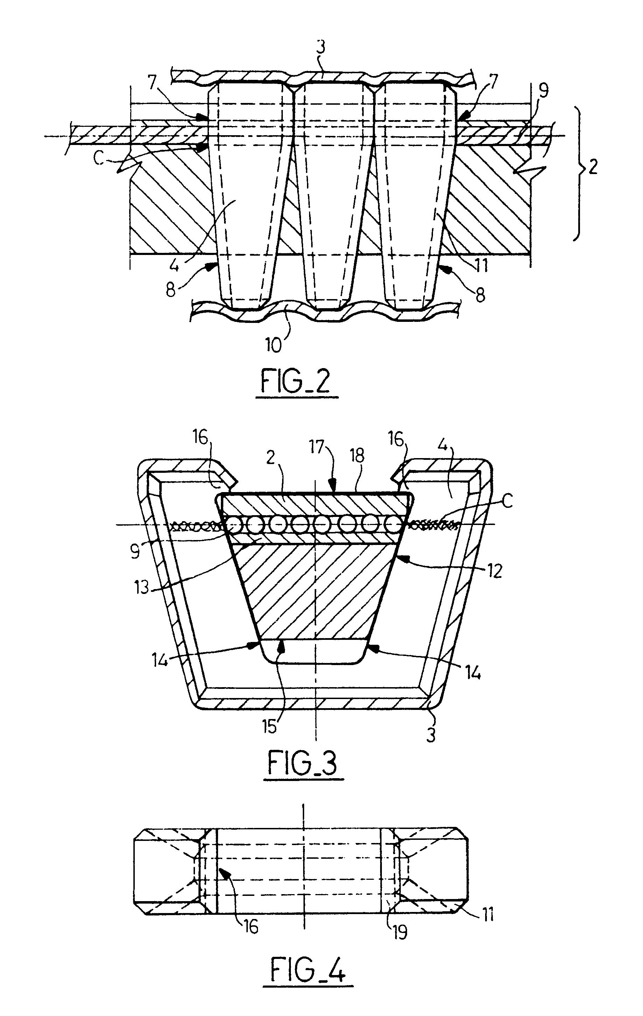

La figure 2 est une vue latérale, coupant partiellement le tissu d'enveloppage pour montrer quelques étriers rigides entourant l'âme sans fin.

Les étriers rigides (4), vus latéralement, sont disposés à cheval sur une âme sans fin (2), représentée dans la trajectoire rectiligne reliant les deux poulies d'une transmission par lien souple. La transmission de puissance se fait majoritairement par l'appui réciproque des étriers rigides (4) par leurs faces parallèles (7).

Leurs faces obliques (8) sont symétriquement dégagées, comme représenté, pour permettre l'enroulement, sur un rayon minimal, lors de l'appui sur les flasques des poulies. Dans une variante non représentée, lesdites faces obliques sont dégagées, de façon dissymétrique, l'une d'elles étant dans le prolongement de l'une des faces parallèles (7).

L'entrée et la sortie de cette trajectoire rectiligne provoquent un déplacement de l'appui dans la zone de contact (C) entre deux étriers rigides successifs, réalisés en matériaux polymériques renforcés, à haut module, ou en métal. Une caractéristique fondamentale de l'invention est l'âme sans fin (2), constituée d'une courroie trapézoïdale de structure composite classique, dont la nappe de traction (9) est formée de câblés ou de retors de textile à haut module.

Dans une réalisation préférentielle, ladite nappe de traction (9) est formée de fibres aramides, traitées pour une liaison intime avec la composition élastomérique de la base de ladite courroie trapézoïdale.

Le tissu d'enveloppage (3), disposé par dessus l'empilage des étriers rigides (4), est montré en coupe. Son existence nécessite la création de chanfreins (11) sur toute la périphérie desdits étriers rigides (4) pour permettre la déformabilité dudit tissu d'enveloppage (3), dans la zone (10) parallèle à la nappe de traction (9), lors du passage desdits étriers rigides (4) d'une trajectoire courbe (enroulée sur poulie) à une trajectoire rectiligne. En effet, une rotation, plus ou moins parfaite suivant le raccordement des faces parallèles (7) aux faces obliques (8), dans la zone de contact (C), se produit entre deux étriers rigides successifs, provoquant, de ce fait, l'écartement et le rapprochement de leurs extrémités hautes et basses au niveau du chanfrein (11).

Pour cette raison, le tissu d'enveloppage (3), constitué d'un tissu élastique enduit d'une composition élastomérique, représenté pour des raisons de description, enlevé de la face avant de l'étrier rigide (4), est détendu longitudinalement dans la zone (10) et suit partiellement le chanfrein (11) du fait de l'adhérisation simultanée à la vulcanisation de la composition élastomérique imprégnant le tissu élastique.

Ce tissu d'enveloppage (3), avantageusement disposé obliquement par rapport à la courroie composite, peut être utilisé en épaisseur simple ou multiple.

La figure 3 est une section droite de la courroie entre deux étriers rigides formant maillons, seuls sont donc coupés l'âme sans fin et le tissu d'enveloppage.

L'âme sans fin (2) peut être constituée d'une courroie trapézoïdale enveloppée, mais elle est préférentiellement constituée, comme représenté, d'une courroie trapézoïdale à flancs nus. En ce cas, les flancs obliques (12) sont obtenus par tranchage, dans un manchon cylindrique de grande longueur au sein duquel est formée, par enroulement, la nappe de traction (9), noyée dans une base en composition élastomérique (13).

Ladite nappe de traction (9) est constituée d'un câblé ou retors d'aramide ou autre matériau textile de haut module, traité chimiquement pour assurer la liaison intime avec la composition élastomérique de la base de la courroie. L'étrier rigide (4), visible non coupé derrière la section droite, est en contact avec les flancs obliques (12) de l'âme sans fin (2), par toute la hauteur de ses faces intérieures (14).

Ladite âme sans (2) est renforcée, pour la zone située entre la nappe de traction (9) et la petite base du trapèze (15), soit par des plis textiles, soit par des fibres courtes, de façon à résister à la compression sous l'effet de coin qui se produit à l'enroulement sur une poulie. Lors de la courbure, ce matériau renforcé, élastique longitudinalement, vient se plaquer sur les faces intérieures (14) de l'étrier rigide (4). Biseautés dans la direction perpendiculaire (longitudinale), les étriers rigides (4) se rapprochent et participent donc à la compression volumétrique de cette partie de l'âme sans fin (2) située entre la fibre neutre, au niveau de la nappe de traction (9), et la petite base du trapèze (15).

Il est donc compréhensible que des contraintes nettement plus élevées que celles rencontrées dans l'usage courant d'une courroie trapézoïdale puissent être exercées par les parois rigides constituées par les faces intérieures (14) des étriers rigides (4), quine se séparent pas des flancs obliques (12) de l'âme sans fin (2), mais au contraire accompagnent ladite âme sans fin (2), par contact sans contrainte, dans sa trajectoire rectiligne entre poulies. Or, des pressions du même ordre de grandeur, car elles en sont la conséquence, s'exercent de façon analogue sur les faces obliques extérieures de l'étrier rigide (4) plaquées par leur appui sur les flasques des poulies.

Les risques de contraintes alternées sont considérablement réduits du fait de l'utilisation d'une âme sans fin (2) en forme de courroie trapézoïdale. C'est la raison pour laquelle des puissances transmises par l'organe de transmission ainsi réalisé peuvent être d'autant plus élevées.

Il se trouve que, dans la trajectoire rectiligne, les étriers rigides (4), formant maillons, restent empilés et comprimés par leurs faces parallèles, au moins par la zone de contact (C), sur un brin dit de retour pour ladite âme sans fin (2), dans lequel la nappe de traction (9) est la moins tendue. Sur son brin tendu, les étriers rigides (4) formant maillons ne sont plus nécessairement en contact les uns avec les autres, et peuvent se trouver libérés, en particulier sous l'effet de la pesanteur.

Pour remédier à ce risque, des harpons latéraux (16) ménagés sur l'étrier rigide (4), viennent enfermer partiellement la grande base (17) de l'âme sans fin (2). La mise en place des étriers rigides (4), lors de l'assemblage, se fait en forçant sur l'élasticité propre de ladite âme sans fin (2), non renforcée au dessus de la fibre neutre entre la nappe de traction (9) et la grande base (17).

Cependant, entre l'état de courbure et la trajectoire rectiligne, cette dernière zone subit une variation élastique de longueur que ne présente pas le matériau de l'étrier rigide (4) dans la zone des harpons latéraux (16), et, pour cette raison, des micro-glissements longitudinaux peuvent se produire entre les deux types de composants. Il est alors avantageux de pourvoir la grande base (17) de l'âme sans fin (2), d'un revêtement à faible coefficient de friction (18), par exemple un film mince de polyéthyiène de très haute masse moléculaire, ou de polytétrafluorure d'éthylène.

Le tissu d'enveloppage (3) revêt toutes les faces extérieures des étriers rigides (4) et il est collé au moins à leurs faces obliques extérieures par un second traitement thermique, postérieur à l'assemblage. Il peut être, suivant l'application, interrompu, au droit de chaque harpon latéral (16), comme représenté, ou bien poursuivi avec recouvrement par dessus la grande base (17) sur laquelle il ne collera pas, du fait de la présence de ce revêtement à faible coefficient de friction (18).

La figure 4 est une vue de dessus du seul étrier rigide (4), pour expliciter la présence du chanfrein (11) sur toutes ses arêtes, le but étant de permettre la déformabilité du tissu d'enveloppage. Une partie haute (19) du chanfrein recouvre également la zone des harpons latéraux (16), pour retenir collé le bord interrompu du tissu d'enveloppage, en particulier lorsque s'exerce la force centrifuge à l'enroulement sur chaque poulie. Sur des applications à vitesses suffisamment réduites, ce tissu d'enveloppage, déformable, peut être refermé sur lui-même, avec recouvrement, le collage se produisant en appui sur le revêtement à faible coefficient de friction de la grande base de l'âme sans fin, surface dont il ne reste pas solidaire, permettant ainsi les micro-déplacements entre celle-ci et les étriers rigides.

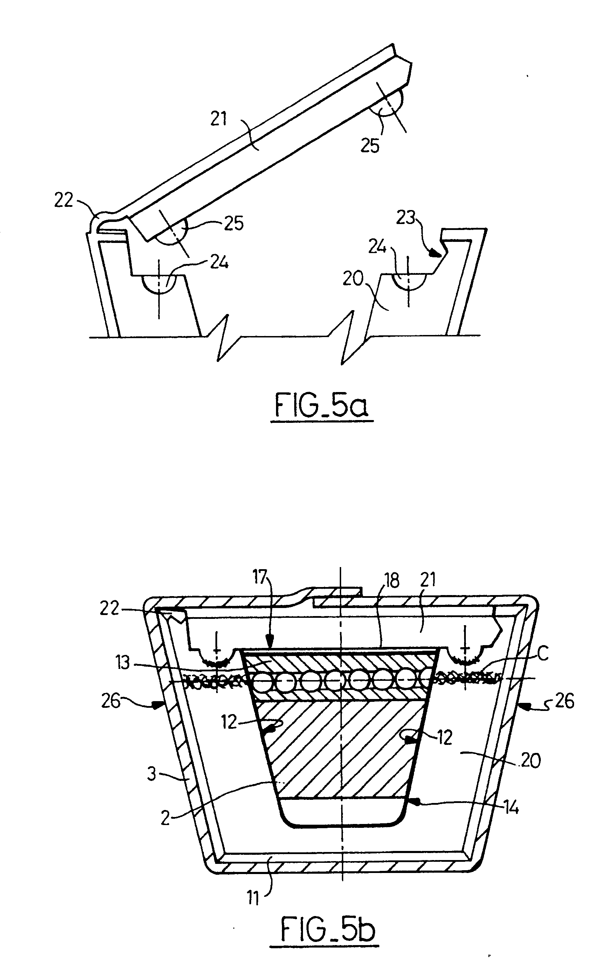

La figure 5 représente une variante de réalisation de l'étrier rigide , refermée par une languette par dessus l'âme sans fin, variante minimisant les risques de fatigue dus aux contraintes alternées qui se localisent dans la partie bisautée de l'étrier rigide (4) de la variante précédemment décrite, ouvert en U, là où l'épaisseur est justement réduite.

La vue 5a est une vue partielle d'un étrier fermé (20) à l'état libre, sortant de fabrication, la vue 5b montre ledit étrier fermé (20), positionné sur l'âme sans fin (2), vue en coupe.

L'étrier fermé (20) est équipé d'une languette (21), articulée par une charnière (22) venue lors du moulage comme représenté en vue 5a, par exemple.

Dans un système d'assemblage qui doit pouvoir être automatisé à une cadence de production élevée, la languette (21) est refermée par un guidage approprié après la mise en place de chaque étrier fermé (20) à cheval sur l'âme sans fin. Un rebord (23) retient, éventuellement clipsée provisoirement, l'extrémité de ladite languette. Quoiqu'il en soit, la fermeture est assurée par l'engagement prévu de cavités (24) et des bossages conjugués (25) disposés sur le corps de l'étrier fermé (20) et sur la languette (21).

Trois dispositions sont alors possibles ; dans l'une, les cavités (24) sont placées dans le corps de l'étrier fermé (20), les bossages conjugués (25) étant alors portés par la languette (21) ; dans la configuration inversée, les cavités (24) sont placées dans la languette (21), les bossages conjugués (25) étant alors portés par le corps de l'étrier fermé (20). Une troisième possibilité consiste à placer chacun des éléments, cavité (24) et bossage conjugué (25), l'un sur le corps de l'étrier fermé (20), l'autre sur la languette (21).

Un procédé de soudage au défilé, par ultrasons par exemple, ou bien un collage tel que par adhésif cyanoacrylate ou tout procédé d'assemblage analogue, permet la fermeture définitive éventuelle desdits étriers par dessus l'âme sans fin (2).

Ainsi, l'étrier fermé (20), montré en vue 5b, qui reçoit sur ses faces intérieures (14), par l'intermédiaire des flancs obliques (12) de l'âme sans fin (2), des contraintes de compression qui peuvent être élevées, est mieux en mesure de résister à la fatigue alternée.

Lors de l'assemblage, le nombre de maillons constitués des étriers rigides (4) ou des étriers fermés (20) est choisi de façon à ménager un jeu, qui est absorbé lors du passage du lien souple de transmission entre les rayons les plus réduits d'enroulement sur poulies, et les deux trajectoires rectilignes.

En effet, du fait du basculement des zones de contact (C) entre étriers, cette configuration entraîne, pour l'empilage des étriers rigides (4) ou des étriers fermés (20), une longueur développée supérieure à celle qu'il prendrait dans une configuration circulaire.

Lesdits jeux doivent donc être équilibrés lors de la pose du tissu d'enveloppage (3) par dessus lesdits étriers. Pour favoriser les micro-déplacements qui se produisent entre l'âme sans fin (2) et la face supérieure des étriers fermés (20), constituée par la languette (21), la grande base (17) de l'âme sans fin (2) est préférentiellement pourvue d'un revêtement à faible coefficient de frottement (18).

Afin d'améliorer la friction de leurs faces obliques extérieures (26) sur les flasques des poulies, les étriers fermés (20) sont revêtus du tissu d'enveloppage (3) qui est, préférentiellement, collé aux seules faces obliques extérieures (26).

La présence dudit tissu d'enveloppage (3) n'est pas indispensable sur la petite base et la grande base extérieure du trapèze ainsi constitué, mais son élasticité, permise par une solidarisation partielle, par collage, à l'étrier fermé (20), le long des chanfreins (11) qui suivent chacune des arêtes dudit étrier fermé (20), participe à l'équilibrage des jeux entre étriers.

De plus, il assure un certain amortissement des risques vibratoires, par basculement sur la zone de contact (C) lors des rotations réciproques. Le tissu d'enveloppage (3) peut être refermé et collé sur lui-même par recouvrement au dessus de la languette (21) comme représenté.

Un procédé préférentiel de fabrication du lien souple de transmission selon l'invention comporte deux cycles thermiques pour chaque composant. Les étriers rigides ou les étriers fermés sont préalablement fabriqués par moulage par injection en moule fermé comportant un grand nombre d'empreintes. Composés par exemple de polyamide semi-aromatique, préférentiellement renforcé de fibres courtes, leur nombre peut, en effet, être de l'ordre de deux cents à trois cents maillons pour un lien souple de transmission de développement un mètre.

La réalisation de l'âme sans fin fait appel aux procédés connus de réalisation de courroies trapézoïdales enveloppées ou à flancs nus. Dans une variante utilisant le retournement des courroies unitaires, un manchon cylindrique de longueur appropriée est confectionné par succession de couches, la première étant constituée du revêtement à faible coefficient de friction tel par exemple un film de polyéthylène de très haute masse moléculaire ou de polytétrafluorure d'éthylène. La base en composition élastomérique est disposée au dessus et au dessous de la nappe de traction, formée par exemple d'un retors de polyamide aromatique traité pour assurer l'adhérence avec la composition élastomérique.

Les couches renforcées par tissu ou par fibres courtes sont ensuite disposées pour former la zone de l'âme sans fin résistant à la compression transversale.

Ledit manchon cylindrique est alors vulcanisé par traitement thermique sous pression, autour d'un noyau interne qui procure un état de surface lisse au revêtement à faible coefficient de friction. Puis le manchon est découpé en âmes sans fin individuelles qui sont ensuite retournées.

Le montage des étriers sur l'âme sans fin est une opération nécessairement mécanisée, en raison du nombre élevé des composants. Les étriers rigides sont forcés pour faire franchir aux harpons latéraux la zone de la grande base et de la nappe de traction de l'âme sans fin.

Dans la variante à étriers fermés les languettes sont rabattues après le montage, leur fermeture étant permise par la flexion de la charnière. Il est éventuellement procédé au soudage ou au collage des bossages conjugués dans le creux des cavités par un procédé au défilé rendant ainsi l'assemblage indémontable ultérieurement.

Dans un cas comme dans l'autre, l'ensemble est revêtu du tissu d'enveloppage, avec éventuellement le dépot préalable d'une couche d'adhésif sur les surfaces à solidariser, les bords étant soit partiellement rabattus, soit superposés pour assurer la fermeture. L'ensemble constituant le lien souple de transmission est alors enfermé dans un moule, de manière à presser le tissu déformable sur les faces externes des étriers et leurs chanfreins. Un traitement thermique approprié assure la liaison du tissu d'enveloppage aux étriers, sans porter préjudice aux matériaux déjà vulcanisés formant l'âme sans fin.

La courroie composite formant lien souple de transmission ainsi réalisée peut être utilisée comme une courroie trapézoïdale ou comme une courroie large équipant un variateur de vitesse.

La courroie composite formant lien souple de transmission, objet de l'invention présente par rapport aux solutions de l'art antérieur les avantages suivants :

    – les performances peuvent être considérées comme la somme des possibilités des transmissions à maillons poussées, fonctionnant à sec, et de la courroie trapézoïdale qui porte ceux-ci ;

    – le contact réciproque des étriers et de l'âme sans fin, par les parois obliques, assure automatiquement le centrage et l'alignement des étriers formant maillons ;

    – le glissement relatif des composants, constaté dans les transmissions à maillons poussés, est minimisé par l'adhérence mécanique des étriers formant maillons sur les parois obliques déformables de l'âme sans fin ;

    – le lien souple de transmission résultant allie à l'adhérence mécanique des courroies trapézoïdales connues de l'art antérieur, l'incompressibilité transversale des liens souples à maillons rigides ;

    – la présence du tissu d'enveloppage servant à l'adhérence mécanique sur les flasques des poulies des étriers formant maillons les relie entre eux, élastiquement, avec amortissement des risques de vibrations à des fréquences acoustiquement génantes ;

    – la désolidarisation, par fatigue alternée, des composants de l'âme sans fin est minimisée par une meilleure répartition des contraintes sur une surface qui reste en contact permanent avec l'étrier formant maillon ;

    – la fabrication, en grande série, de quelques tailles seulement d'étriers, autorise la constitution de liens souples de toutes longueurs primitives de courroies du marché, rendant, de ce fait, la production particulièrement économique.

Sans sortir du cadre de l'invention, l'homme de l'art peut combiner toutes variations de forme et toutes dimensions pour assurer une transmission performante par lien souple entre poulies à gorge, non nécessairement limité à deux poulies.

## Revendications

1.  Lien souple de transmission de puissance, à rapport fixe ou à rapport variable par poulies à gorge, fonctionnant par adhérence à sec, constitué d'un âme sans fin, souple et quasiment inélastique, équipée de maillons poussants, transversalement rigides, caractérisé en ce que ladite âme sans fin (2) est formée d'une courroie trapézoïdale à flancs obliques (12) en contact avec les faces intérieures (14) des maillons poussants en forme d'étriers (4) ou (20) entourant ladite âme sans fin (2) et en ce que lesdits étriers, rigides, sont enveloppés d'un tissu d'enveloppage (3) qui forme la surface au contact des flasques des poulies de transmission (5) (6).

2.  Lien souple de transmission de puissance selon la revendication 1, caractérisé en ce que l'âme sans fin (2) est formée d'une courroie trapézoïdale à flancs obliques (12), enveloppés.

3. Lien souple de transmission de puissance selon la revendication 1, caractérisé en ce que l'âme sans fin (2) est formée d'une courroie trapézoïdale à flancs obliques (12) nus.

4. Lien souple de transmission de puissance selon l'une des revendications 1 à 3, caractérisé en ce que l'âme sans fin (2) est pourvue sur sa grande base (17) d'un revêtement à faible coefficient de friction (18), sur lequel les maillons en forme d'étriers (4) ou (20) viennent reposer, lors de la trajectoire rectiligne en brin de retour.

5. Lien souple de transmission de puissance selon l'une des revendications 1 à 4 caractérisé en ce que le tissu d'enveloppage (3) revêt la totalité des surfaces extérieures des maillons poussants en forme d'étriers (4) ou (20).

6. Lien souple de transmission de puissance selon la revendication 5, caractérisé en ce que le tissu d'enveloppage (3) est disposé en couches multiples sur la surface extérieure des maillons poussants en forme d'étriers (4) ou (20)

7. Lien souple de transmission de puissance selon l'une des revendications 5 ou 6 caractérisé en ce que le tissu d'enveloppage (3) est collé sur les faces obliques extérieures (26) des maillons poussants en forme d'étriers (4) ou (20).

8. Lien souple de transmission de puissance selon la revendication 7, caractérisé en ce que le tissu d'enveloppage (3) est collé également le long d'un chanfrein (11) qui suit chacune des arêtes des maillons poussants en forme d'étriers (4) ou (20).

9. Lien souple de transmission de puissance selon l'une des revendications 1 à 8, caractérisé en ce que chacun des maillons poussants est constitué d'un étrier rigide (4), revêtu du tissu d'enveloppage (3) refermé sur lui-même, par recouvrement de ses extrémités au dessus du revêtement à faible coefficient de friction (18) dont la grande base (17) de l'âme sans fin (2) est pourvue et dont il n'est pas solidaire.

10. Lien souple de transmission de puissance selon l'une des revendications 1 à 8, caractérisé en ce que chacun des maillons poussants est constitué d'un étrier fermé (20), comportant une languette (21) venant enfermer l'âme sans fin (2) par l'engagement dans des cavités (24) de bossages conjugués (25).

11. Lien souple de transmission de puissance selon la revendication 10, caractérisé en ce que la fermeture définitive de chaque étrier fermé (20) est assurée par soudage ou collage dans les cavités (24) des bossages conjugués (25).

FIG_1

FIG_2

FIG_3

FIG_4

FIG_5a

FIG_5b

Office européen
des brevets

**RAPPORT DE RECHERCHE EUROPEENNE**

Numero de la demande

EP 91 40 0875

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5) |
| A | FR-A-1 066 329 (CHAVAND)<br>* Page 3, colonne de gauche, lignes 5-13; figure 7 *<br>--- | 1 | F 16 G 5/16 |
| A | PATENT ABSTRACTS OF JAPAN, vol. 11, no. 44 (M-560)[2491], 10 février 1987; & JP-A-61 206 847 (BANDO CHEM.) 13-09-1986<br>--- | 1 | |
| A | FR-A- 605 649 (RODERWALD)<br>* Page 1, lignes 45-54; figures 1,2,4 *<br>--- | 1 | |
| A | EP-A-0 257 646 (BANDO CHEMICAL INDUSTRIES)<br>* Page 6, lignes 30-36; figure 10 *<br>--- | 1 | |
| A | EP-A-0 325 497 (CAOUTCHOUC MANUFACTURE ET PLASTIQUES)<br>& FR-A-2 625 783 (Cat. D)<br>--- | | |
| A | PATENT ABSTRACTS OF JAPAN, vol. 8, no. 258 (M-340)[1695], 27 novembre 1984; & JP-A-59 131 052 (NIPPON DENSO) 27-07-1984<br>--- | | DOMAINES TECHNIQUES RECHERCHES (Int. Cl.5)<br><br>F 16 G |
| A | PATENT ABSTRACTS OF JAPAN, vol. 10, no. 320 (M-530)[2376], 30 octobre 1986; & JP-A-61 127 948 (HONDA MOTOR) 16-06-1986<br>--- | | |
| D,A | FR-A-2 437 531 (VARITRAC)<br>--- | | |
| D,A | EP-A-0 305 227 (HUTCHINSON)<br>--- | | |
| D,A | US-A-3 720 113 (VAN DOORNE)<br>--- | | |
| D,A | FR-A-2 089 587 (VAN DOORNE)<br>--- -/- | | |

Le présent rapport a été établi pour toutes les revendications

| Lieu de la recherche | Date d'achèvement de la recherche | Examinateur |
|---|---|---|
| LA HAYE | 10-06-1991 | BARON C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Page    2

Office européen
des brevets

**RAPPORT DE RECHERCHE EUROPEENNE**

Numero de la demande

EP  91 40 0875

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 000 802  (VAN DOORNE'S) --- | | |
| D,A | EP-A-0 014 013  (VAN DOORNE'S) --- | | |
| D,A | EP-A-0 014 492  (VAN DOORNE'S) --- | | |
| A | EP-A-0 109 556  (MICHELIN) & FR-A-2 536 486 (Cat. D) --- | | |
| A | DE-A-3 319 963  (MICHELIN) & FR-A-2 527 723 & FR-A-2 536 487 (Cat. D) --- | | |
| D,A | DE-A-2 557 724  (HEYNAU) --- | | |
| D,A | FR-A-2 540 953  (RENAULT) --- | | |
| D,A | EP-A-0 073 962  (NISSAN MOTOR) --- | | |
| D,A | US-A-4 433 965  (HATTORI) --- | | |
| D,A | US-A-4 610 648  (MIRANTI) ------ | | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 10-06-1991 | BARON C. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P0402)